**Europäisches Patentamt**

**European Patent Office**

**Office européen des brevets**

(11) Veröffentlichungsnummer: **0 006 145**
**A1**

# EUROPÄISCHE PATENTANMELDUNG

(21) Anmeldenummer: **79101574.6**

(22) Anmeldetag: **22.05.79**

(51) Int. Cl.³: **H 04 L 11/00, H 04 Q 3/54,**
**G 06 F 15/16**

(30) Priorität: **21.06.78 DE 2827270**

(43) Veröffentlichungstag der Anmeldung: **09.01.80**
**Patentblatt 80/1**

(84) Benannte Vertragsstaaten: **BE DE GB IT NL SE**

(71) Anmelder: **SIEMENS AKTIENGESELLSCHAFT Berlin und München, Postfach 261, D-8000 München 22 (DE)**

(72) Erfinder: **von Stetten, Hanns Norbert, Esterbergstrasse 32, D-8135 Söcking (DE)**

(54) **Schaltungsanordnung für eine Vermittlungsanlage mit Mikroprozessoren.**

(57) Vermittlungsanlage mit als selbständige Einheiten arbeitenden Mikroprozessoren (MC1 bis MC64), die in der Netzebene (NE) nach dem Prinzip der Lastteilung in der Vermittlungsebene (VE) nach dem Prinzip der Funktionsteilung angeordnet sind, und die über einen gemeinsamen Datenbus (DB) unter Steuerung eines zentralen Taktes (T) derart zusammenarbeiten, daß zyklisch jeweils nur ein Mikroprozessor (z. B. MC1) einen Informationsblock aussendet, den gleichzeitig alle anderen Mikroprozessoren (z. B. MC2 bis MC 64) empfangen und nur bei Vorliegen einer für sie vorgesehenen Adressenangabe übernehmen. Ein-/Ausgabeoperationen (E/A) sowie weitere Abläufe (VEZT) führen die Mikroprozessoren zwischen der Anschaltung an den Datenbus (DB) unabhängig voneinander durch.

SIEMENS·AKTIENGESELLSCHAFT
Berlin und München

Unser Zeichen
VPA 78 P 2 3 4 7 EUR

### Schaltungsanordnung für eine Vermittlungsanlage

Die Erfindung betrifft eine Schaltungsanordnung für eine Vermittlungsanlage mit Mikroprozessoren zur dezentralen Durchführung der vermittlungstechnischen Aufgaben.

Bei dem Aufbau von Fernschreib-Vermittlungssystemen verfolgte man bisher den Weg einer möglichst großen Zentralisierung. Begünstigt wurde diese Entwicklung durch den Aufbau rechnergesteuerter Vermittlungssysteme. Mit zunehmender Größe einer Vermittlungsanlage werden jedoch die zur Durchführung aller vermittlungstechnischen Aufgaben erforderlichen Abläufe immer komplexer und unüberschaubarer. Sie sind nur noch mit einem sehr umfangreichen Programmierungsaufwand beherrschbar. Als Beispiel sei hier auf das Problem hingewiesen, das bei der Einhaltung der für die Durchführung von vermittlungstechnischen Aufgaben unbedingt notwendigen Realzeiterfordernisse auftritt, und das in herkömmlichen zentralgesteuerten Systemen in der Regel mit Hilfe von sogenanten Interrupt-Verfahren gelöst wird. Dadurch entstehen bei Spitzen-

Fk 1 Fra / 8.6.1978

belastungen Stausituationen, die nur sehr aufwendig beherrschbar sind. Auch im Hinblick auf die Vielfältigkeit der an eine Vermittlungsanlage anzuschließenden Leitungen, auf denen mit verschiedenen Übertragungsverfahren und mit verschiedenen Übertragungsgeschwindigkeiten und Codes gearbeitet wird, treten bei einem zentralgesteuerten System vor allem deshalb Probleme auf, weil bei einer Änderung der Anschlüsse zugleich auch ein Eingriff in die gesamte Systemstruktur notwendig ist.

Mit der Entwicklung von Mikroprozessoren wurde nun ein kostengünstiges Bauelement zur Verfügung gestellt, das leicht programmierbar und daher für einen vielfältigen Einsatz ohne besonderen Aufwand geeignet ist.

Der Erfindung liegt die Aufgabe zugrunde, eine Vermittlungsanlage anzugeben, die unter Verwendung bekannter Mikroprozessoren eine sehr flexible Anpassung an verschiedene Einsatzfälle gestattet, wobei die bei einem zentralgesteuerten Vermittlungssystem auftretenden Nachteile einer sehr komplexen Programmstruktur vermieden werden. Vor allem ist es eine Aufgabe der Erfindung, eine Vermittlungsanlage zu schaffen, die den Anforderungen einer Vielzahl von verschiedenen Anwendern mit sich ständig ändernden Forderungen ohne größeren Eingriff in die Systemstruktur und ohne großen Entwicklungsaufwand gerecht wird.

Diese Aufgabe wird gemäß der Erfindung dadurch gelöst, daß in der Netzebene zum Anschluß von jeweils einer Klasse von Anschlußleitungen mit bestimmten und gleichen Übertragungseigenschaften und in der Vermittlungsebene zum Anschluß von jeweils zur Durchführung bestimmter und gleicher vermittlungsspezifischer Aufgaben und Dienste vorgesehener Einrichtungen ein eigener, für seine Aufgaben autonom funktionsfähiger Mikroprozessor vorgesehen ist, daß alle Mikroprozessoren über einen gemeinsamen Datenbus miteinander verbunden sind, wobei die Übertragung von Nachrichten in Sende- und Empfangsrichtung zwischen den Mikroprozessoren in Form von mit Adressenangaben versehenen Informationsblöcken geschieht, daß ein zentraler Takt vorgesehen ist, unter dessen Steuerung zyklisch jeweils nur ein Mikroprozessor zur Aussendung eines Informationsblockes und sämtliche anderen Mikroprozessoren zum Empfang eines Informationsblockes an den gemeinsamen Datenbus anschaltbar sind, und daß jeder Mikroprozessor einen empfangenen Informationsblock nur bei Vorliegen einer für die an den betreffenden Mikroprozessor angeschlossenen Anschlußleitungen oder Einrichtungen bestimmten Adressenangabe übernimmt.

Eine Vermittlungsanlage mit diesen Merkmalen weist aufgrund der konsequenten Dezentralisierung den Vorteil auf, daß die auf der Netzebene zur Anschaltung der verschiedenen Leitungen vorgesehenen Mikroprozessoren nach dem Prinzip der Lastteilung, die zur Durchführung von vermittlungstechnischen Aufgaben auf der Vermittlungsebene vorgesehenen Mikroprozessoren nach dem Prinzip der Funktionsteilung eingesetzt werden können. Die Begriffe Netzebene und Vermittlungsebene dienen hier lediglich der Verdeutlichung der Funktionsweise der Anlage, innerhalb der jeder der einzelnen Mikroprozessoren als eine selbständige Einheit arbeitet. Damit wird nicht nur der Aufbau der Vermittlungsanlage übersichtlicher und damit eine Wartung während des Betriebes einfacher, sondern es ergeben sich gegenüber zentralisierten Systemen erheblich günstigere und einfachere Möglichkeiten für eine spätere Änderung oder Ergänzung der Vermittlungsanlage. So ist es ohne weiteres möglich, an die Anlage sowohl Leitungen anzuschließen, auf denen mit verschiedenen Übertragungsverfahren und

verschiedenen Übertragungsgeschwindigkeiten gearbeitet wird, als auch die Vermittlungsanlage im Hinblick auf weitere zusätzliche und über die üblichen vermittlungstechnischen Funktionen hinausgehende Dienste zu erweitern. In beiden Fällen sind dazu lediglich weitere dezentrale Verarbeitungseinheiten, also weitere Mikroprozessoren, einzusetzen.

Auch hinsichtlich der Ausfallsicherheit ergeben sich mit der Anordnung nach der Erfindung insofern Vorteile, als sich der Ausfall einer oder mehrerer Mikroprozessoren stets nur in einer Funktionseinschränkung äußert. In einem solchen Fall sind jeweils nur die an den oder an die ausgefallenen Mikroprozessoren angeschlossenen Leitungen oder Einrichtungen nicht erreichbar. Das intakte Restsystem bleibt jedoch voll funktionsfähig.

Weitere Einzelheiten der Erfindung werden im folgenden anhand der Zeichnungen erläutert. Dort zeigt

Fig. 1 ein Ausführungsbeispiel einer Vermittlungsanlage gemäß der Erfindung.

Fig. 2 und 3 zeigen jeweils ein Zeitdiagramm zur Erläuterung der prinzipiellen Wirkungsweise der Anordnung nach Fig. 1.

Fig. 4 zeigt den prinzipiellen Aufbau eines Mikroprozessors, an den acht Leitungen angeschlossen sind.

Fig. 5 zeigt ein Beispiel für die Abtastfolgen bei Anschluß von Leitungen verschiedener Übertragungsgeschwindigkeiten.

Fig. 6 zeigt ein Ablaufdiagramm zur Erläuterung der zyklischen Anschaltung der als Sender und Empfänger arbeitenden Mikroprozessoren.

Fig. 7 schließlich zeigt ein Ablaufdiagramm zur Erläuterung einer prioritätsabhängigen Vermittlung von Nachrichten.

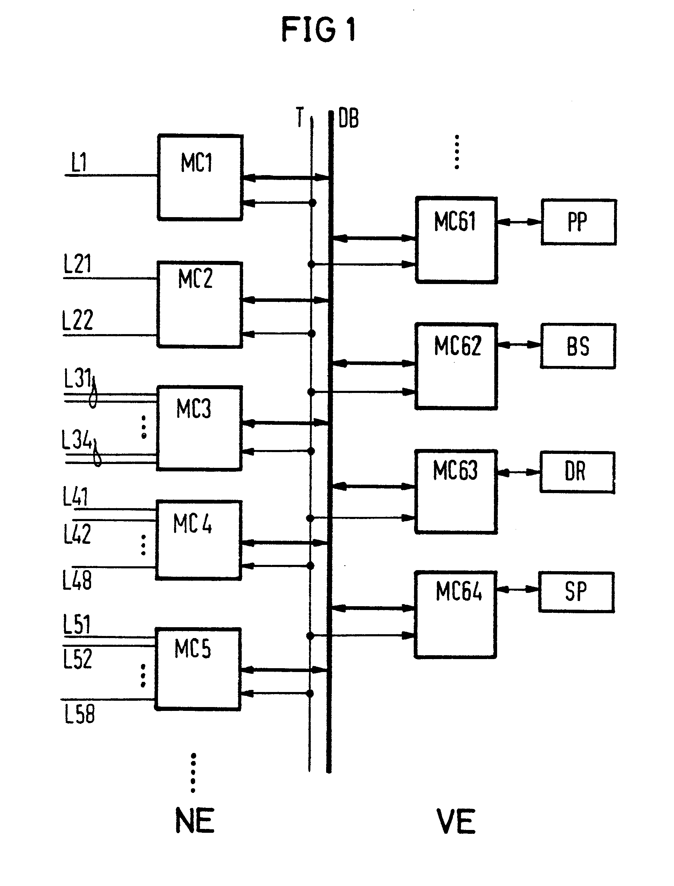

Das in Fig. 1 dargestellte Ausführungsbeispiel weist in der Netzebene NE und in der Vermittlungsebene VE jeweils eine Reihe von Mikroprozessoren auf. Im Beispiel sind insgesamt 64 Mikroprozessoren MC1 bis MC64 vorgesehen, von denen die dargestellten Mikroprozessoren MC1 bis MC5 zum Anschluß von Leitungen und die dargestellten Mikroprozessoren MC61 bis MC64 zum Anschluß von zur Durchführung vermittlungsspezifischer Aufgaben und Dienste vorgesehener Einrichtungen dienen. Sämtliche Mikroprozessoren MC1 bis MC64 sind an den gemeinsamen Datenbus DB angeschlossen. Jeder Mikroprozessor MC1 bis MC64 bildet eine selbständige dezentrale Verarbeitungseinheit, an die entweder Leitungen einer bestimmten, hinsichtlich Übertragungsart und Übertragungsgeschwindigkeit gleichen Klasse angeschlossen sind, wie das für die Mikroprozessoren MC1 bis MC5 der Fall ist, oder an die Einrichtungen zur Durchführung jeweils gleicher Aufgaben und Dienste angeschaltet sind, wie das für die Mikroprozessoren MC61 bis MC64 der Fall ist. Im Beispiel nach Fig. 1 sind an den Mikroprozessor MC1 eine Leitung L1 mit einer Übertragungsgeschwindigkeit von 2400 bit/sek, an den Mikroprozessor MC2 zwei Leitungen L21 und L2 mit einer Übertragungsgeschwindigkeit von je 1200 bit/sek, an den Mikroprozessor MC3 vier Leitungen L31 bis L34 für eine Übertragung von jeweils 600 bit/sek und an die Mikroprozessoren MC4 und MC5 jeweils acht Leitungen L41 bis L48 bzw. L51 bis L58 mit einer Übertragungsgeschwindigkeit von 300 bit/sek angeschlossen.

Die in der Vermittlungsebene VE liegenden Mikroprozessoren, im Beispiel die Mikroprozessoren MC61 bis MC64, stellen jeweils Steuermodule für Prüfeinrichtungen PP zur Systemprüfung, für Einrichtungen eines Bedienplatzes BS, für den Anschluß von druckenden Endgeräten DR und für den Anschluß eines oder mehrerer weiterer Speicher SP dar. Im Bedarfsfalle kann die Anzahl der in der Vermittlungsebene VE vorgesehenen Mikroprozessoren durch weitere ergänzt werden.

Jeder der Mikroprozessoren MC1 bis MC64 enthält die für
seine speziellen Aufgaben erforderlichen Programminformationen, die jedoch infolge der jeweils eng umgrenzten
Aufgaben, die von einem Mikroprozessor unabhängig von
der Tätigkeit der anderen Mikroprozessoren durchzuführen sind, sowohl hinsichtlich ihrer Anzahl als auch
hinsichtlich ihrer Komplexität erheblich einfacher sind
als bei zentral gesteuerten Anlagen.

Die Zusammenarbeit der einzelnen Mikroprozessoren erfolgt
über den gemeinsamen Datenbus DB unter Steuerung eines
zentralen Taktes T. Das geschieht in der Weise, daß in
zyklischer Reihenfolge jeweils nur ein Mikroprozessor
einen Informationsblock über den Datenbus aussendet, den
gleichzeitig alle anderen Mikroprozessoren empfangen.
Aufgrund der jedem auf den Datenbus gesendeten Informationsblock zugeordneten Adressen werden in den empfangenden Mikroprozessoren durch Vergleich mit dort gespeicherten Adressenangaben jeweils nur diejenigen Informationsblöcke übernommen und gespeichert, die für den betreffenden Mikroprozessor bestimmt sind, d.h. die über diesen
Mikroprozessor weitergegeben werden können. Ein Informationsblock kann dabei Nachrichten- und/oder Signalisierungszeichen enthalten. Die Länge eines Informationsblockes
hängt von den Eigenschaften der verwendeten Mikroprozessoren ab. Für den praktischen Einsatz können mit verfügbaren Mikroprozessoren beispielsweise Blocklängen von
512 Byte oder von 1024 Byte innerhalb der für die Sendung bzw. für den Empfang über den gemeinsamen Datenbus
DB zur Verfügung stehend Zeit übertragen werden. Die Bildung eines Informationsblockes erfolgt jeweils in den einzelnen Mikroprozessoren. Im Falle der Mikroprozessoren, an die Leitungen angeschlossen sind, geschieht die Bildung eines Informationsblockes durch zeichenweise Aufsammlung und Zwischenspeicherung der auf den Leitungen eintreffenden Zeichen. Die Bildung einer Blockadresse sowie die Zuordnung einlaufender Nachrichtenzeichen zu bereits vorhandenen Nachrichtenzeichen mit entsprechenden Adressen erfolgt im Mikroprozessor aufgrund dort vorhandener Programminformationen.

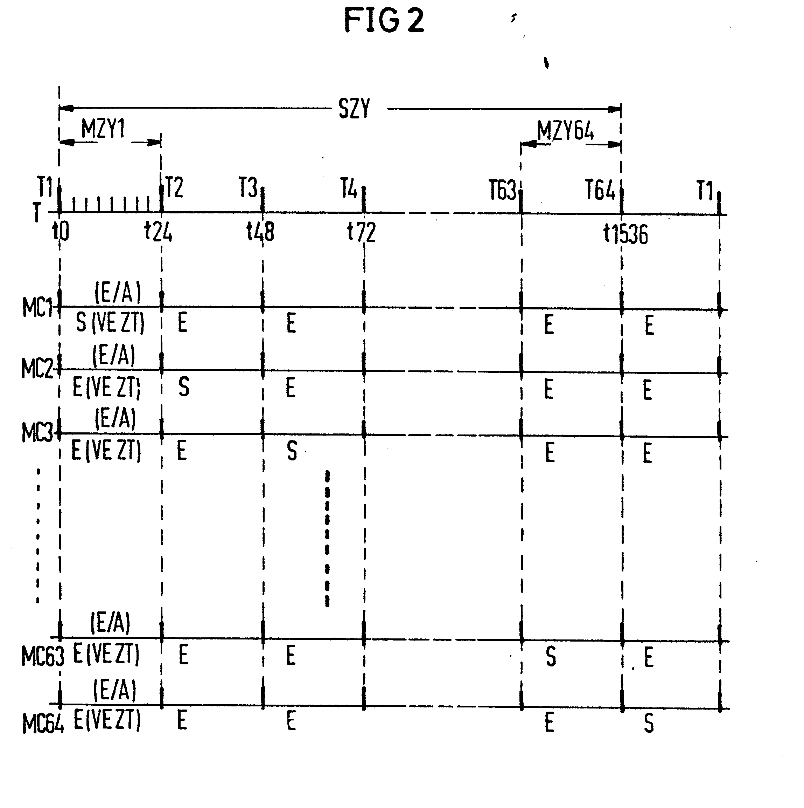

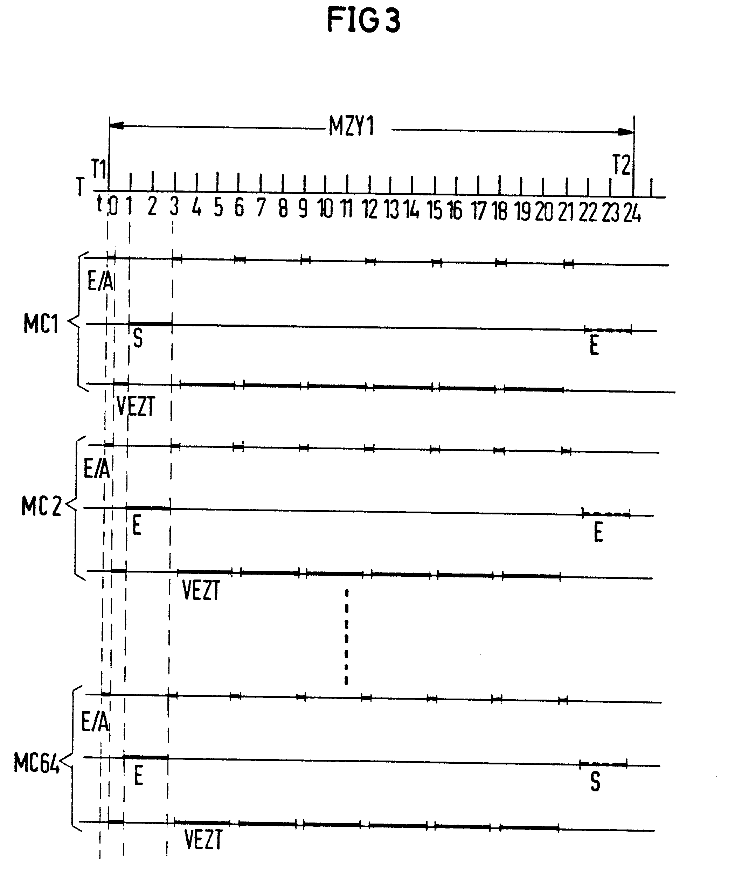

Wie später anhand von Fig. 2 und 3 näher erläutert wird, geschieht das unter Steuerung des zentralen Taktes T im Rahmen eines sogenannten Modulzyklus, der sicherstellt, daß dazu eine ausreichende Zeitdauer zur Verfügung steht. Bei jedem Aufruf eines Mikroprozessors zur Sendung auf den Datenbus DB wird jeweils eine volle Zelle des mikroprozessorinternen Zwischenspeichers, deren Inhalt der Länge eines Informationsblockes entspricht, ausgesendet.

Die dezentrale Anordnung der Mikroprozessoren als jeweils selbständig arbeitende Einheiten, die zyklisch im Rahmen eines Systemzyklus von einem Sende- in einen Empfangszustand umschaltbar sind, ermöglicht es, einen über den Datenbus DB ausgesendeten Informationsblock parallel bei allen als Empfänger arbeitenden Mikroprozessoren zu empfangen und dort durch einen einfachen Vergleichsvorgang jeweils nur die für diesen Mikroprozessor bestimmten Informationsblöcke gezielt auszuwählen. Nur diese Informationsblöcke werden blockweise abgespeichert und später unter Steuerung des Modulzyklus zeichenweise in Ausgangspuffer übergeben und über eine bestimmte abgehende Leitung ausgesendet. Diese in zeitlich gleichdauernde Zyklen eingeordneten Abläufe gewährleisten zusammen mit der dezentralen Anordnung der Mikroprozessoren eine zeitgerechte und allen auftretenden Realzeitforderungen gerecht werdende Vermittlung eintreffender Verbindungswünsche und Nachrichten.

In Ausgestaltung der Erfindung können ein oder mehrere Überlaufspeicher vorgesehen sein, die entsprechend dem angegebenen Konzept ebenfalls durch Mikroprozessoren mit ihnen zugeordneten zusätzlichen Speichern realisiert sind. Im Beispiel der Fig. 1 ist das der Mikroprozessor MC64 mit dem Speicher SP. Es ist vorteilhaft, beim Überlaufspeicher alle über den Datenbus DB übertragenen Informationsblöcke zu empfangen und temporär abzuspeichern. Das bietet die Möglichkeit, in bestimmten Fällen auf diese Informationen zurückgreifen zu können. Als Beispiel sei hier der Besetztfall erwähnt. Dieser Fall liegt dann vor, wenn ein über den Datenbus DB übertragener Informationsblock in einem empfangenden Mikroprozessor aufgrund einer positiven Adressenbewertung zwar als ein für diesen bestimmter Informationsblock erkannt wurde, dort aber kein freier Speicherplatz zur Aufnahme des Informationsblockes vorhanden ist. Da der Mikroprozessor MC64 des Überlaufplatzes ebenso wie alle anderen Mikroprozessoren der Vermittlungsanlage in den zyklischen Sende- und Empfangsrhythmus eingeordnet ist, dieser also innerhalb eines jeden Systemzyklus mindestens einmal als Sender arbeitet, kann dieser Informationsblock mehrmals, z.B. solange erneut ausgesendet werden, bis der als Empfänger bestimmte Mikroprozessor den Informationsblock übernehmen kann.

Die Funktionsweise der in Fig. 1 dargestellten Vermittlungsanlage wird nun anhand der in Fig. 2 und Fig. 3 dargestellten Zeitdiagramme im einzelnen erläutert.

Unter der Voraussetzung, daß an den gemeinsamen Datenbus 64 Mikroprozessoren angeschlossen sind, wird unter Steuerung des zentralen Taktes T mit den Taktphasen T1 bis T64 eines Systemzyklus SZY zyklisch jeweils einer der Mikroprozessoren MC1 bis MC64 als Sender und alle anderen 63 als Empfänger geschaltet. Während der Taktphase T1 ist beispielsweise der Mikroprozessor MC1 als Sender geschaltet (S in Fig. 2), während die Mikroprozessoren MC2 bis MC64 als Empfänger arbeiten (E in Fig. 2). Während der Taktphase T2 arbeitet lediglich der Mikroprozessor MC2 als Sender, während der Mikroprozessor MC1 sowie die Mikroprozessoren MC3 bis MC64 als Empfänger arbeiten. Schließlich sind während der Taktphase T64 der Mikroprozessor MC64 als Sender und die Mikroprozessoren MC1 bis MC63 als Empfänger geschaltet. Während dieser Taktphase werden dann die in dem Mikroprozessor MC64 zugeordneten Überlaufspeicher enthaltenen Nachrichten auf den gemeinsamen Datenbus gesendet. In Fig. 2 ist dieser Vorgang jeweils durch die Bezeichnet S für den Sendezustand und E für den Empfangszustand gekennzeichnet worden. Während jedes Sendevorganges S sendet der betreffende Mikroprozessor einen Informationsblock von beispielsweise 512 oder 1024 Byte auf den gemeinsamen Datenbus. Dieser wird dann parallel von allen sich im Empfangszustand E befindlichen Mikroprozessoren gleichzeitig empfangen. Innerhalb eines jeden zwischen zwei Taktphasen T1 bis T64 des zentralen Taktes T liegenden Zeitraumes laufen in jedem Mikroprozessor MC1 bis MC64 neben dem Sendevorgang bzw. dem Empfangsvorgang weitere Vorgänge ab. Es handelt sich dabei um die Ein-Ausgabe von Informationen von den angeschlossenen Leitungen bzw. auf die angeschlossenen Leitungen oder von angeschlossenen externen Endeinrichtungen bzw. zu externen Endeinrichtungen. In Fig. 2 ist dafür die Bezeichnung E/A gewählt worden. Weiterhin steht eine ausreichende Verarbeitungszeit VEZT zur Verfügung, während der ein Mikroprozessor seine internen Aufgaben abwickelt. Wie bereits vorher erwähnt, handelt es sich dabei unter anderem um die Adressenbildung, die Zuordnung von einlaufenden oder auszusendenden Nachrichten, die Bildung von Steuerkriterien in Richtung zur Netzebene und zur Vermittlungsebene sowie um sonstige Programmabläufe. Die Steuerung dieser Vorgänge erfolgt innerhalb
eines Modulzyklus MZY in Synchronismus zu dem zentralen
Takt T. In Fig. 2 sind die Taktphasen der Modulzyklen
mit to bis t1536 bezeichnet. Zur näheren Erläuterung dieser Vorgänge wird nunmehr auf Fig. 3 verwiesen.
Dort ist der zwischen den Taktphasen T1 und T2 eines Systemzyklus SZY liegende Zeitbereich des Modulzyklus MZY1
mit den Taktimpulsen to bis t24 dargestellt. Es wird
hierzu vorausgesetzt, daß die im Beispiel verwendeten
Mikroprozessoren MC1 bis MC64 jeweils acht Zeichenpuffer
enthalten, die mit jedem dritten Taktimpuls to, t3, t6
usw. bis t21 zur Übernahme der in ihnen enthaltenen Information in den Speicher des Mikroprozessors bzw. zur
Übernahme einer Information aus diesem Speicher veranlaßt werden. Diese Vorgänge, die eine Ein-Ausgabe-Operation darstellen, sind wiederum mit E/A bezeichnet worden. Zwischen den Takten t1 und t3 sind sämtliche Mikroprozessoren MC1 bis MC64 an den gemeinsamen Datenbus angeschaltet, wobei der Mikroprozessor MC1 als Sender (S
in Fig. 3) und die Mikroprozessoren MC2 bis MC64 als Empfänger (E in Fig. 3) arbeiten. Mit Ausnahme der zur Durchführung von Ein- und Ausgabeoperationen E/A erforderlichen
Zeitdauer steht die übrige Zeit des Modulzyklus MZY1 zur
Durchführung von Abläufen im Mikroprozessor zur Verfügung.
In Fig. 3 ist diese Zeit mit VEZT (Verarbeitungszeit) bezeichnet worden.

In Ausgestaltung der Erfindung besteht auch die Möglichkeit, den mit dem Überlaufspeicher zusammenarbeitenden
Mikroprozessor, im Beispiel den Mikroprozessor MC64, innerhalb einer jeden Taktphase T1 bis T64 des Systemzyklus
SZY einmal als Sender und alle anderen Mikroprozessoren
MC1 bis MC63 als Empfänger zu schalten. Diese Ausgestaltung bietet dann Vorteile, wenn in einem Vermittlungssystem der hier beschriebenen Art häufig Anforderungen für die Übernahme von Informationsblöcken aus dem Überlaufspeicher auftreten. In Fig. 3 ist diese Möglichkeit gestrichelt dargestellt, wobei das Beispiel zeigt, daß mit dem Taktimpuls t22 im Modulzyklus MZY1 der Mikroprozessor MC64 einen Informationsblock aussendet, den alle anderen Mikroprozessoren MC1 bis MC63 empfangen. In hier nicht dargestellter Weise kann sich dieser Vorgang dann während jedes Modulzyklus wiederholen.

Das in Fig. 2 und Fig. 3 dargestellte Zeitraster für einen Systemzyklus und für einen Modulzyklus ist zum einen durch die Anzahl der maximal angeschlossenen Mikroprozessoren und zum anderen durch die Anzahl der an einem Mikroprozessor maximal angeschlossenen Leitungen oder Kanäle sowie der Übertragungsgeschwindigkeit, mit der auf diesen Leitungen gearbeitet wird, bestimmt. Unter der Annahme, daß beispielsweise die Vermittlungsanlage die verlustfreie Bedienung von acht Leitungen bei maximal 300 bit/sek Übertragungsgeschwindigkeit ermöglichen soll, ergibt sich bei Verwendung eines bekannten Mikroprozessors mit zwei unabhängigen 8-bit-Pufferspeichern je Leitung die Dauer eines Modulzyklus MZY1 bis MZY64 zu 24 ms. Bezogen auf die Darstellung in Fig. 3 bedeutet das, daß jeder der genannten Puffer im Mikroprozessor alle 3 ms zur Eingabe oder zur Ausgabe von Informationen aufgerufen wird. Unter dieser Voraussetzung und mit den für bekannte Mikroprozessoren für die Ein- und die Ausgabe einer 8-bit-Information erforderlichen Zeitdauer von 100 μs verbleibt zwischen jeweils drei Taktimpulsen eines Modulzyklus MZY1 bis MZY64 eine frei verfügbare Zeit von 2,9 ms. Während einem dieser Zeitintervalle erfolgt die Anschaltung der Mikroprozessoren an den Datenbus. Dabei sendet jeweils ein Mikroprozessor einen Informationsblock aus, den alle anderen empfangen. Die restlichen Zeitintervalle stehen als Verarbeitungszeiten VEZT zur Abwicklung interner Vorgänge in den Mikroprozessoren zur Verfügung. Unter Zugrundelegung der oben erwähnten Ausgangsparameter werden somit alle Mikroprozessoren gleichzeitig im Rhythmus von 24 ms für eine Dauer 2ms an den gemeinsamen Datenbus angeschaltet, wobei jeweils immer nur einer sendet und alle anderen empfangen. Unter den genannten Bedingungen beträgt die Zeitdauer für einen Modulzyklus MZY1 bis MZY64 dann 24 ms und die für einen Systemzyklus SZY beträgt 1536 ms. Das bedeutet, daß bei einer Übertragungsrate über den Datenbus von 512 Byte pro Zyklus von einem Mikroprozessor über den Datenbus eine Nachrichtenmenge von 333 Byte pro Sekunde zu- oder abgeführt werden kann.

Die zeitgerechte Anschaltung sowie die Umsteuerung von Empfangszustand auf den Sendezustand der einzelnen Mikroprozessoren MC1 bis MC64 wird zum einen durch den zentralen Takt T und zum anderen durch einen in jedem Mikroprozessor vorgesehenen Anschaltezähler erreicht, dessen Zählerstand in den einzelnen Mikroprozessoren zyklisch versetzt ist. Der Anfangszählerstand kann beispielsweise in Form einer Konstanten in einem Speicher des Mikroprozessors abgespeichert sein. Der Zählerstand der Anfangszähler in jedem Mikroprozessor kann in einem der Modulzyklen, beispielsweise im 64. Modulzyklus, stets mit dem individuellen Anfangswert erneut geladen werden. Diese zyklisch versetzte Arbeitsweise macht einen Adreßbus für die einzelnen Mikroprozessoren überflüssig.

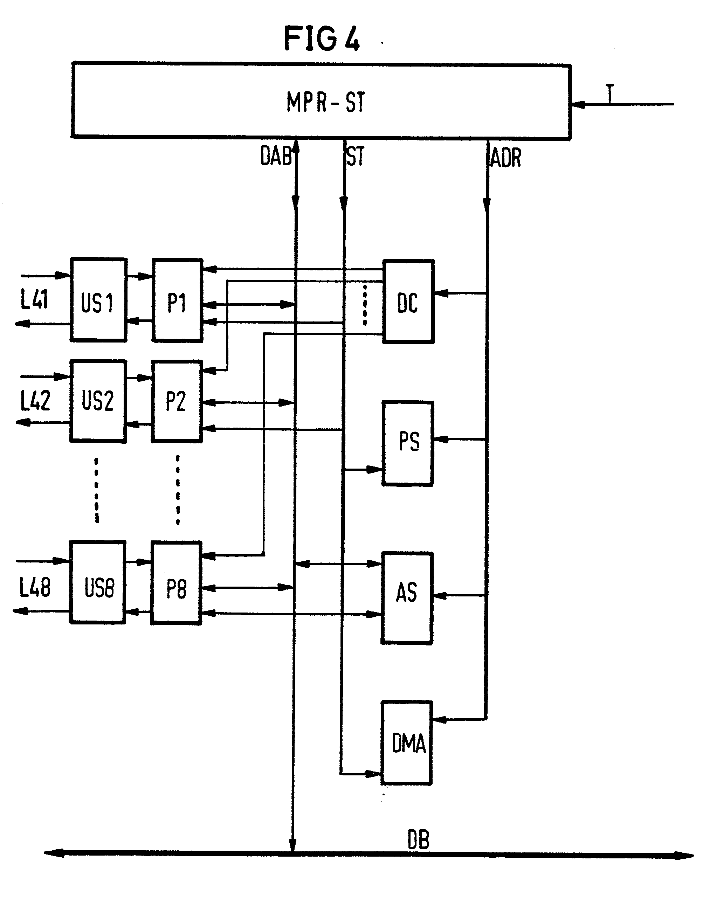

Die im vorhergehenden beschriebene Arbeitsweise wird nunmehr noch anhand eines Prinzipschaltbildes für einen Mikroprozessor erläutert, das in Fig. 4 dargestellt ist. Dort ist mit MPR-ST die Steuerung des Mikroprozessors dargestellt, der der zentrale Takt T zugeführt wird. Die einzelnen Leitungen, im Beispiel die 8 Leitungen L41 bis L48 sind jeweils an Umsetzerschaltungen US1 bis US8 angeschlossen, denen jeweils ein Pufferspeicher P1 bis P8
zur Aufnahme eines 8-bit-Zeichens nachgeschaltet sind.
Durch Bewertung der aus dem zentralen Takt T abgeleiteten Taktimpulse des Modulzyklusses werden über einen
Decoder DC die einzelnen Pufferspeicher P1 bis P8 zur
Abgabe einer 8-bit-Information an den internen Datenbus
DB geschaltet, über den die Daten dann in den Speicher
des Mikroprozessors gelangen. Zur Ausgabe von Daten werden diese aus dem Speicher des Mikroprozessors in die
einzelnen Pufferspeicher P1 bis P8 in der gleichen Weise
übertragen. Der Mikroprozessor enthält weiterhin einen
Programmspeicher PS sowie einen Adressenspeicher AS, in
welchem die den abgehenden Leitungen zugeordneten Adressen gespeichert sind, aufgrund deren die über den Datenbus DB empfangenen Informationsblöcke als für den betroffenen Mikroprozessor gültige Informationsblöcke erkannt
werden. Eine weitere mit DMA bezeichnete Einrichtung
steuert den direkten Speicherzugriff zu dem Speicher
des Mikroprozessors. Unter Steuerung dieses Teiles wird
jeweils ein Informationsblock von beispielsweise von 512
oder 1024 Byte während der Sendephase des Mikroprozessors
auf den zentralen, für alle Mikroprozessoren gemeinsamen
Datenbus DB ausgesendet. Der Decoder DC, der Programm-
und der Adressenspeicher PS und AS sowie die Einrichtung
für den direkten Speicherzugriff DMA sind jeweils am
einen internen Adressenbus ADR angeschlossen. Als Speicher eines Mikroprozessors zur Aufnahme von Informationsblöcken ist in der Regel eine Speicherkapazität von 8 KB
ausreichend, um einen evtl. auftretenden Nachrichtenstau
dezentral abzufangen.

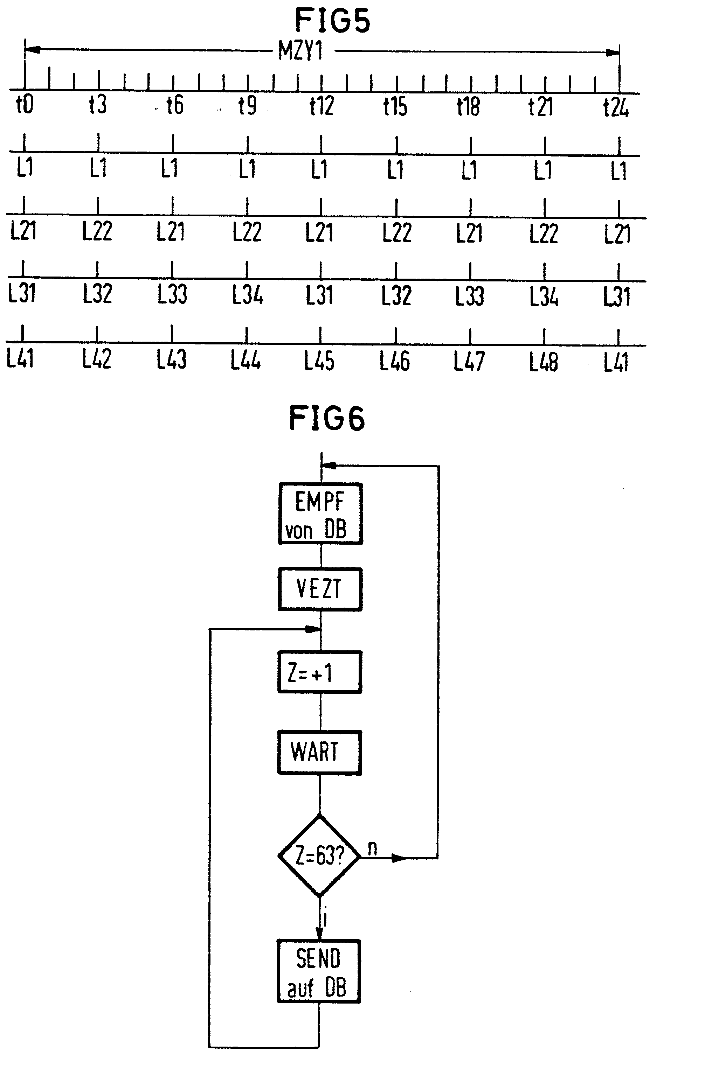

Das im vorhergehenden beschriebene Beispiel ging von
einer Übertragungsgeschwindigkeit von 300 bit/sek aus.
Für den Fall, daß an einen Mikroprozessor Leitungen oder Endgeräte mit einer höheren Übertragungsgeschwindigkeit angeschlossen sind, ist die Anzahl der angeschlossenen Leitungen entsprechend zu reduzieren. Die Pufferspeicher eines für den Anschluß solcher Leitungen vorgesehenen Mikroprozessors werden dann entsprechend der Übertragungsgeschwindigkeit innerhalb eines Modulzyklus entsprechend häufiger bedient. Das in Fig. 5 dargestellte Beispiel zeigt, daß die Leitung L1, auf der mit einer Übertragungsgeschwindigkeit von 2400 bit/sek gearbeitet wird, während des Modulzyklus MZY1 achtmal, die Leitungen L21 und L22, auf denen mit einer Übertragungsgeschwindigkeit von 1200 bit/sek gearbeitet wird, während eines gleichen Zeitraumes jeweils viermal bedient, die Leitungen L31 und L34 bzw. die Leitungen L41 bis L48 während eines gleichen Zeitraumes jeweils zweimal bzw. jeweils einmal bedient werden.

Es wurde im Vorhergehenden bereits erwähnt, daß jeder der an den gemeinsamen Datenbus angeschalteten Mikroprozessoren während eines Systemzyklus jeweils nur einmal zur Aussendung und 63 mal zum Empfang eines Informationsblockes geschaltet ist. Die zeitgerechte Anschaltung sowie die Umsteuerung von Senden auf Empfangen wird, worauf im Vorhergehenden bereits hingewiesen wurde, durch die Synchronisation des zentralen Taktes und einem in jedem Mikroprozessor vorgesehenen Zähler erreicht, dessen Anfangszählerstand für jeden Mikroprozessor individuell eingestellt und von Mikroprozessor zu Mikroprozessor zyklisch versetzt ist. Dieser Vorgang ist in Form eines Ablaufdiagramms in Fig. 6 dargestellt. Diese Darstellung gilt als Beispiel für den Mikroprozessor MC63. Bei jeder der in Fig. 2 dargestellten Taktphase T1 bis T64 eines Systemzyklus SZY wird der Mikroprozessor MC63 an den gemeinsamen Datenbus DB geschaltet, wobei er abhängig vom Stande seines Zählers entweder als Empfänger oder als Sender arbeitet. Solange der individuelle Zählerstand, der hier auf den Wert Z = 63 eingestellt ist, nicht erreicht ist, wird jeweils ein Informationsblock von beispielsweise 512 Byte empfangen. Im einzelnen handelt es sich um folgende Vorgänge. An dem Empfang eines Informationsblockes (EMPF von DB), der z.B. nach 2ms abgeschlossen ist, schließt sich die anhand von Fig. 3 beschriebene Verarbeitungszeit VEZT an.

Aufgrund interner und hier nicht weiter dargestellter Abläufe wird dabei durch das im Mikroprozessor vorgesehene Bewertungsprogramm entschieden, ob der empfangene Informationsblock für den betreffenden Mikroprozessor bzw. für die an ihn angeschlossenen Leitungen bestimmt ist oder nicht. In ebenfalls nicht dargestellter Weise werden Ein- und Ausgabeoperationen bzw. Einordnungs- und Speichervorgänge durchgeführt. Zugleich wird auch der Zählerstand des mikroprozessorindividuellen Zählers um Eins erhöht (Z = +1). Dem Mikroprozessor stehen bis zum Beginn der nächsten Taktphase des Systemzyklus, wie anhand von Fig. 3 beschrieben wurde, eine Wartezeit (WART) von beispielsweise 22 ms zur Verfügung. Nach Ablauf dieser Wartezeit wird der Zählerstand des individuellen Zählers überprüft (Z = 63?) und im Falle einer fehlenden Übereinstimmung der bei der nächsten Taktphase eintreffende Informationsblock wiederum empfangen. Ist dagegen der individuell eingestellte Zählerstand, im Beispiel der Zählerstand Z = 63 erreicht, so wird der Mikroprozessor auf Sendung umgeschaltet. Während der nächsten Taktphase des Systemzyklus, im Beispiel mit Beginn der Taktphase T63, wird jetzt ein Informationsblock auf den Datenbus DB ausgesendet (SEND auf DB). Aufgrund dieses von Mikroprozessor zu Mikroprozessor versetzten Zählerstandes ist ein eigener Systemadreßbus nicht erforderlich.

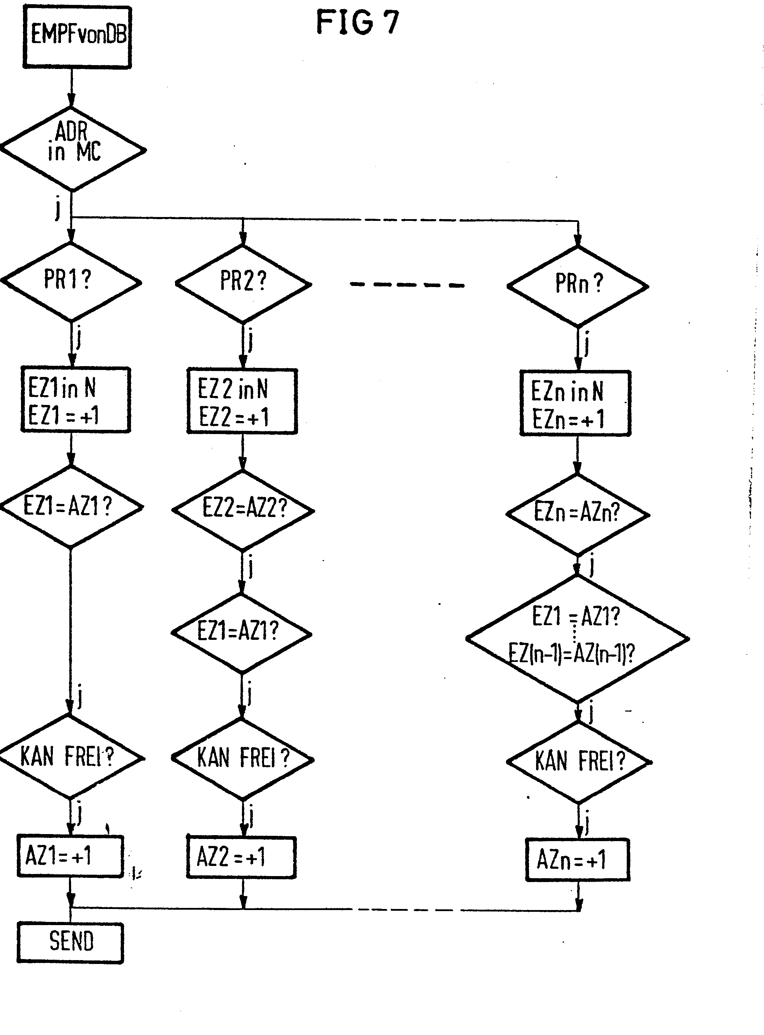

In Ausgestaltung der Erfindung ist es auch möglich, eine prioritätsabhängige Vermittlung von Nachrichten zu gewährleisten. Dazu ist es lediglich erforderlich, daß die
als Informationsblöcke über den Datenbus übertragenen
Nachrichten mit einer Prioritätskennzeichnung versehen
sind, und daß jedem Mikroprozessor pro Priorität zwei
Zähler für jede Ausgaberichtung zugeordnet sind. Da der
erste dieser Zähler jeweils bei Eingang eines Informationsblockes über den Datenbus und der andere jeweils
bei Aussendung einer Nachricht verändert wird, ist es
zweckmäßig, von einem Eingangs- und von einem Ausgangszähler je Prioritätsklasse zu sprechen. Zur Erläuterung
der Wirkungsweise einer prioritätsabhängigen Vermittlung
wird im folgenden auf Fig. 7 verwiesen. Das dort dargestellte Ablaufdiagramm geht davon aus, daß für einen bestimmten Mikroprozessor n Prioritätsklassen vorgesehen
sind, wobei der ersten Prioritätsklasse PR1 der Eingangszähler EZ1 und der Ausgangszähler AZ1, der zweiten
Prioritätsklasse PR2 der Eingangszähler EZ2 und der Ausgangszähler AZ2 und der n-ten Prioritätsklasse PRn der
Eingangszähler EZn und der Ausgangszähler AZn zugeordnet
ist. Ein über den Datenbus empfangener Informationsblock
(EMP von DB) wird zunächst daraufhin überprüft, ob die
Nachricht für den betreffenden Mikroprozessor bestimmt
ist (ADR in MC?). Ist das der Fall und handelt es sich
beispielsweise um eine Nachricht der Prioritätsklasse PR1,
so wird der aktuelle Stand des Eingangszählers EZ1 in die
Adressenangabe der Nachricht übernommen (EZ1 in N). Zugleich wird der Eingangszähler EZ1 um Eins erhöht (EZ1 + 1).
Durch Vergleich des Zählerstandes des Eingangszählers mit
dem Ausgangszähler wird die Anzahl der wartenden Nachrichten festgestellt (EZ1 = AZ1 ?) und zugleich der aktuelle
Sendezeitpunkt ermittelt.

Dieser liegt dann vor, wenn beide Zählerstände übereinstimmen. Ist in diesem Falle ein freier abgehender Kanal vorhanden (KAN frei ?), so wird unter Erhöhung des Zählerstandes des Ausgangszählers (AZ + 1) die Nachricht ausgesendet. Für Nachrichten niedrigerer Prioritätsklassen PR2 bis PRn findet jeweils ein weiterer Vergleich statt, durch den festgestellt wird, ob Nachrichten höherer Priorität vorliegen. Das geschieht in der Weise, daß ein Vergleich der allen höherwertigeren Prioritätsklassen zugeordneten Ein- und Ausgängszählerstände in diesen Ablauf mit einbezogen werden. Anhand von Fig. 7 erkennt man, daß beispielsweise im Falle einer Prioritätsklasse PR 2 zugeordneten Nachricht neben einem Vergleich der Zählerstände des der Prioritätsklasse PR2 zugeordneten Eingangs- und Ausgangszähler EZ2 und AZ2 auch noch ein Vergleich der der höheren Prioritätsklasse PR1 zugeordneten Eingangs- und Ausgangszähler EZ1 und AZ1 stattfindet. In der gleichen Weise findet vor der Aussendung einer der Prioritätsklasse PRn zugeordneten Nachricht neben einem Vergleich der Zählerstände der dieser Prioritätsklasse zugeordneten Eingangs- und Ausgangszähler EZn und AZn auch noch ein Vergleich aller den höherwertigeren Prioritätsklassen PR1 bis PRn - 1 zugeordneten Eingangs- und Ausgangszähler EZ1, AZ1 bis EZ (n - 1), AZ (n - 1) statt. Diese Abläufe finden stets während der zwischen zwei Taktimpulsen eines Modulzyklus liegenden Verarbeitungszeiten statt. Wie anhand von Fig. 3 beschrieben, steht dazu eine ausreichende Zeit zur Verfügung. Derartige Zählerstandsvergleiche lassen sich mit den üblichen für Mikroprozessoren vorgesehenen Prozeduren ohne nennenswerte Schwierigkeiten durchführen.

Die beschriebene Anordnung bietet vor allem für eine nach Art einer Speichervermittlung arbeitende Vermittlungsanlage Vorteile. Es ist jedoch auch eine zeichenweise Übertragung von Nachrichten durchführbar, d.h. die Anlage kann auch nach Art einer Durchschaltevermittlung eingesetzt werden. Dazu wird in jedem Modulzyklus ein weiterer Zeitabschnitt vorgesehen, während dem jeweils ein Mikroprozessor zur zeichenweisen Sendung an den gemeinsamen Datenbus angeschaltet ist. Entsprechend den mit dem Einsatz bekannter Mikroprozessoren erreichbaren Geschwindigkeiten ist für eine Verbindung eine Zeitdauer von 2 $\mu$s ausreichend. Für z.B. 20 gleichzeitig bestehende Durchschalteverbindungen ergibt sich dann für den erwähnten Zeitabschnitt eine Dauer von 40 $\mu$s mit einer durch den Modulzyklus bestimmten Folge von z.B. 24 ms.

7 Figuren
7 Patentansprüche

Patentansprüche

1. Schaltungsanordnung für eine Vermittlungsanlage mit Mikroprozessoren zur dezentralen Durchführung vermittlungstechnischer Aufgaben, d a d u r c h   g e k e n n - z e i c h n e t , daß in der Netzebene (NE) zum Anschluß von jeweils einer Klasse von Anschlußleitungen (L1; L21, L22; L31 bis L34; L41 bis L48; L51 bis L58) mit bestimmten und gleichen Übertragungseigenschaften und in der Vermittlungsebene (VE) zum Anschluß von jeweils zur Durchführung bestimmter und gleicher vermittlungsspezifischer Aufgaben und Dienste vorgesehener Einrichtungen (PP, BS, DR, SP) ein eigener, für seine Aufgaben autonom funktionsfähiger Mikroprozessor (MC1 bis MC64) vorgesehen ist, daß alle Mikroprozessoren (MC1 bis MC64) über einen gemeinsamen Datenbus (DB) miteinander verbunden sind, wobei die Übertragung von Nachrichten in Sende- und Empfangsrichtung zwischen den Mikroprozessoren (MC1 bis MC64) in Form von mit Adressenangaben versehenen Informationsblöcken geschieht, daß ein zentraler Takt (T) vorgesehen ist, unter dessen Steuerung zyklisch jeweils nur ein Mikroprozessor (z.B. MC1) zur Aussendung eines Informationsblockes und sämtliche anderen Mikroprozessoren (z.B. MC2 bis MC64) zum Empfang eines Informationsblockes an den gemeinsamen Datenbus (DB) anschaltbar sind, und daß jeder Mikroprozessor (MC1 bis MC64) einen empfangenen Informationsblock nur bei Vorliegen einer für die an den betreffenden Mikroprozessor angeschlossenen Anschlußleitungen oder Einrichtungen bestimmten Adressenangabe übernimmt.

2. Schaltungsanordnung nach Anspruch 1, d a d u r c h   g e k e n n z e i c h n e t , daß durch den zentralen Takt (T) ein Systemzyklus (SZY) bestimmt ist, mit dessen Taktphasen (T1 bis T64) die Mikroprozessoren (MC1 bis MC64) zyklisch zur Aussendung eines Informationsblockes umschaltbar sind, daß innerhalb eines jeden Systemzyklus
(SZY) eine der Anzahl der vorgesehenen Mikroprozessoren
entsprechende Anzahl von Modulzyklen (MZY1 bis MZY64)
festgelegt ist, daß durch die Taktimpulse (t0 bis t23;
t1512 bis t1536) eines Modulzyklus (MZY1 bis MZY64) in
den Mikroprozessoren (MC1 bis MC64) Ein- und Ausgabeoperationen (E/A) zur zeichenweisen Übernahme bzw. Ausgabe von Informationen von bzw. an die angeschlossene
Leitung in der Netzebene (NE) oder von den bzw. an die
angeschlossenen Einrichtungen in der Vermittlungsebene
(VE), mindestens eine Sende- bzw. mindestens eine Empfangsoperation (S, E) zur Aussendung bzw. zum Empfang
eines Informationsblockes auf den bzw. von dem Datenbus
(DB) und die mikroprozessorinternen Abläufe (VEZT) steuerbar sind.

3. Schaltungsanordnung nach Anspruch 1 und 2, d a -
d u r c h   g e k e n n z e i c h n e t ,   daß in
jedem Mikroprozessor (MC1 bis MC64) ein Zähler vorgesehen ist, dessen Anfangszählerstand für jeden in der
Vermittlungsanlage vorgesehenen Mikroprozessor (MC1 bis
MC64) individuell zyklisch versetzt eingestellt ist, und
daß bei Übereinstimmung des eingestellten Zählerstandes
mit einem durch die Taktimpulse (T1 bis T64) des Systemzyklus (SZY) bestimmten Wertes der betreffende Mikroprozessor eine Sendeoperation und bei Nichtübereinstimmung
eine Empfangsoperation für jeweils einen Informationsblock durchführt.

4. Schaltungsanordnung nach den Ansprüchen1 bis 3, d a -
d u r c h   g e k e n n z e i c h n e t ,   daß jeder
der einer bestimmten Klasse von Anschlußleitungen in der
Netzebene (NE) und jeder der einer bestimmten Klasse von
Einrichtungen in der Vermittlungsebene (VE) zugeordnete Mikroprozessor jeweils nur die Adressenangaben der an ihn angeschlossenen Anschlußleitungen oder Einrichtungen enthält.

5. Schaltungsanordnung nach den Ansprüchen 1 bis 3, d a d u r c h   g e k e n n z e i c h n e t, daß mindestens einem der in der Vermittlungsebene (VE) angeordneten Mikroprozessoren (z.B. MC64) mindestens ein zusätzlicher Speicher (SP) zugeordnet ist, daß dieser Mikroprozessor (MC64) sämtliche in der Vermittlungsanlage vorgesehenen Adressenangaben enthält, sämtliche über den Datenbus (DB) übertragenen Informationsblöcke übernimmt und während der für ihn vorgesehenen Sendeoperation nach Aufforderung die Informationsblöcke erneut auf den Datenbus (DB) aussendet.

6. Schaltungsanordnung nach Anspruch 5, d a d u r c h   g e k e n n z e i c h n e t, daß der mit mindestens einem zusätzlichen Speicher (SP) verbundene Mikroprozessor (MC64) außer während der ihm zugeordneten Taktphase (T64) des Systemzyklus (SZY) auch während eines jeden Modulzyklus (MCY1 bis MCY64) durch einen Taktimpuls (z.B. t22) eines Modulzyklus (z.B. MZY1) zur Durchführung einer Sendeoperation (S) und alle anderen Mikroprozessoren (MC1 bis MC63) zur Durchführung einer Empfangsoperation (E) umschaltbar sind.

7. Schaltungsanordnung nach einem der Ansprüche 1 bis 6, d a d u r c h   g e k e n n z e i c h n e t, daß zur prioritätsabhängigen Vermittlung von Nachrichten für jede der für die Anschlüsse eines Mikroprozessors vorgesehenen Prioritätsklassen (PR1 bis PRn) ein Eingangszähler (EZ1 bis EZn) und ein Ausgangszähler (AZ1 bis AZn) vorgesehen ist, daß mit dem Eintreffen einer für den betreffenden Mikroprozessor bestimmten Nachricht der aktuelle Stand des der Prioritätsklasse (z.B. PR1) dieser Nachricht zugeordneten Eingangszählers (z.B.EZ1) in die Adressenangabe der Nachricht übernommen und der Zählerstand des Eingangszählers (EZ1) um Eins erhöht wird, daß im Falle der höchsten Prioritätsklasse jeweils nur ein Vergleich der Zählerstände des Eingangs- und des Ausgangszählers, im Falle niedriger Prioritätsklassen (z.B. PRn) jeweils zusätzlich dazu auch ein Vergleich der Zählerstände der Eingangs- und Ausgangszähler aller höheren Prioritätsklassen durchgeführt wird, und daß bei Übereinstimmung der Zählerstände der Eingangs- und Ausgangszähler der Zählerstand des betreffenden Ausgangszählers um Eins erhöht und die Nachricht ausgesendet wird.

# FIG 1

# FIG 2

# FIG 3

FIG 4

0006145

4/6

## FIG5

## FIG6

0006145

# FIG 7

EMPFvonDB

ADR in MC

j

PR1?

j

EZ1 in N
EZ1 = +1

EZ1=AZ1?

j

KAN FREI?

j

AZ1=+1

SEND

PR2?

j

EZ2 in N
EZ2 = +1

EZ2=AZ2?

j

EZ1=AZ1?

j

KAN FREI?

j

AZ2 = +1

— — — — —

PRn?

j

EZn in N
EZn = +1

EZn=AZn?

j

EZ1 = AZ1?
EZ(n-1)=AZ(n-1)?

j

KAN FREI?

j

AZn=+1

Europäisches Patentamt

**EUROPÄISCHER RECHERCHENBERICHT**

Nummer der Anmeldung  
**0006145**  
79101574.6

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | US- A- 3 735 365 (H.NAKAMURA) + Spalte 2, Zeile 45 bis Spalte 3 Zeile 27; Figur 1 + -- | 1 | H o4 L 11/oo H o4 Q 3/54 G o6 F 15/16 |
| X,P | DE- A- 2 747 442 (WESCOM) 2o.Juli 1978 + Seite 33, Zeile 16 bis Seite 36, Zeile 2; Seite 5o, Zeile 1 bis Seite 53, Zeile 3 + -- | 1 | |
| A | DE- A - 2 751 1o6 (OLIVETTI) + Seite 15, Zeilen 1 bis 1o; Seite 18, Zeilen 4 bis 29; Figur 1 + -- | 1 | **RECHERCHIERTE SACHGEBIETE (Int. Cl.²)** |
| A | US- A- 3 959 775 (J.G.VALASSIS) + Spalte 1, Zeilen 6 bis 16; Spalte 3, Zeilen 27 bis 55 + -- | 1,7 | H o4 L 11/oo H o4 L 11/2o H o4 L 5/22 H o4 Q 3/54 |
| A | DE- B- 2 2oo 456 (RCA) + Spalte 3, Zeilen 2o bis 29; Figur 1 + ---- | 1 | H o4 Q 11/o4 G o6 F 15/16 |

**KATEGORIE DER GENANNTEN DOKUMENTE**

X: von besonderer Bedeutung  
A: technologischer Hintergrund  
O: nichtschriftliche Offenbarung  
P: Zwischenliteratur  
T: der Erfindung zugrunde liegende Theorien oder Grundsätze  
E: kollidierende Anmeldung  
D: in der Anmeldung angeführtes Dokument  
L: aus andern Gründen angeführtes Dokument  
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 17 - o8 - 1979 | HAJOS |

EPA form 1503.1  06.78